# EUROPÄISCHE PATENTSCHRIFT

(11) **EP 3 025 035 B1**
(45) Veröffentlichungstag und Bekanntmachung des Hinweises auf die Patenterteilung: **14.06.2017**
(21) Anmeldenummer: 14741902.2
(22) Anmeldetag: 23.07.2014
(51) Int. Cl.: F01N 3/20

(54) **VORRICHTUNG ZUR AUFNAHME UND BEREITSTELLUNG VON FLÜSSIGEM REDUKTIONSMITTEL**
DEVICE FOR STORING AND PROVIDING OF LIQUID REDUCTANT
DISPOSITIF POUR STOCKER ET METTRE À DISPOSITION UN RÉDUCTEUR DE LIQUIDE

(30) Priorität: 26.07.2013 DE 102013012449; 17.01.2014 DE 102014000643
(43) Veröffentlichungstag der Anmeldung: 01.06.2016
(73) Patentinhaber: Tesona GmbH & Co. KG, 99819 Hörselberg/Hainich (DE)
(72) Erfinder: LANTZSCH, Heiko, 99817 Eisenach (DE)
(74) Vertreter: Kruspig, Volkmar
(86) Internationale Anmeldenummer: PCT/EP2014/065774
(87) Internationale Veröffentlichungsnummer: WO 2015/011169

(56) Entgegenhaltungen:
- WO-A1-2011/085830
- DE-A1-102008 001 948
- DE-A1-102010 004 612
- DE-A1-102011 112 326
- FR-A1- 2 939 481

## Beschreibung

Die Erfindung betrifft eine Vorrichtung zur Aufnahme und Bereitstellung von flüssigem Reduktionsmittel, bestehend aus einem Tank und einem in den Tankinnenraum hineinreichenden, topfartigen Behältnis, wobei im Behältnis mindestens eine Fördereinheit für das Reduktionsmittel, ein Sensor und ein Anschluss zur Abgabe des Reduktionsmittels vorgesehen sind, sowie mit Mitteln zur Befestigung des Behältnisses am oder im Tank, gemäß Oberbegriff des Anspruchs 1.

Zur Reinigung von Abgasen insbesondere mobiler Verbrennungskraftmaschinen gehören Abgasbehandlungsvorrichtungen zum Stand der Technik, die das Abgas der Verbrennungskraftmaschine unter Zuhilfenahme eines dem Abgas zugeführten Reduktionsmittels behandeln.

Eines dieser Abgasreinigungsverfahren basiert auf einer selektiven katalytischen Reduktion, bei welchem die Abgase der Verbrennungskraftmaschine von Stickoxidverbindungen gereinigt werden. Diesbezüglich wird dem Abgas ein die Stickoxidverbindungen reduzierendes Medium zugeführt. Als reduzierendes Medium kommt beispielsweise Ammoniak zum Einsatz. Bei der praktischen Anwendung eines solchen Reduktionsverfahrens muss im Kraftfahrzeug ein Bevorratungsbehältnis für das Reduktionsmittel vorhanden sein und darüber hinaus für einen Transport des Reduktionsmittels zu einem sogenannten Injektor Sorge getragen werden. Als Reduktionsmittel kommt beim derzeitigen Stand der Technik eine Harnstoff-Wasser-Lösung zum Einsatz, die unter dem Handelsnamen AdBlue verfügbar ist.

Die DE 10 2010 010 528 A1 offenbart eine Vorrichtung zur Bereitstellung eines derartigen flüssigen Reduktionsmittels, umfassend einen Reduktionsmitteltank zur Bevorratung des Reduktionsmittels, wobei der Tank mindestens eine Heizung aufweist und diese Heizung beweglich im Reduktionsmitteltank angeordnet und als sogenannte aktive Heizung ausgeführt wird. Mit Hilfe der Beheizung ist sichergestellt, dass die vorerwähnte Harnstoff-Wasser-Lösung bei niedrigen Temperaturen nicht einfriert bzw. im eingefrorenen Zustand aufgetaut werden kann.

Bei dem Reduktionsmitteltank mit Temperatursensor nach DE 10 2010 047 277 A1 ist im Tank selbst ein Einsatz befindlich. Am Einsatz ist ein Temperatursensor vorhanden, um die Temperatur des Reduktionsmittels durch einen metallischen Wandabschnitt hindurch zu ermitteln. Auf der Basis der ermittelten Temperatur erfolgt dann eine Steuerung einer entsprechenden Heizeinrichtung, um das bereits erwähnte Einfrieren des Reduktionsmittels zu verhindern.

Bei dem Behältersystem nach DE 10 2004 046 224 B4 ist im Behälter ein Pumpwerk integriert, wobei das Pumpwerk durch ein Spundloch in den Behälter einführbar ist und diesbezüglich noch eine Pumpenlanze mit dem Pumpwerk in Verbindung steht. Der Pumpenkopf ist vom Pumpwerk trennbar und mit einem integrierten Antriebsmotor versehen, wobei das vom Pumpenkopf abgetrennte Pumpwerk derart in das Spundloch des Behälters eingeführt ist, dass der Behälter mit dem eingeführten Pumpwerk eine dichtend abgeschlossene Einheit ausbildet. Der Pumpenkopf umfasst darüber hinaus einen Anschlussflansch zum kraft- und formschlüssige Anschluss des Pumpenkopfes an das Pumpwerk.

Die Tankanordnung nach DE 10 2011 081 489 A1 geht von einem Reduktionsmitteltank aus sowie einer dem Tank zugeordneten Fördereinrichtung, weiche sich außerhalb des Tanks befindet. Zwischen der Fördereinrichtung und dem Tank ist eine Fluidverbindung vorhanden. Diese ist als Ansaugleitung ausgebildet und reicht in einen sogenannten Schwapptopf hinein, wobei letzterer fest im Inneren des Tanks, insbesondere in einer dort vorgesehenen kragenförmigen Ausnehmung fixiert wird.

Bei der gattungsbildenden DE 10 2010 014 314 A1 ist eine Vorrichtung zur Bereitstellung von flüssigem Reduktionsmittel gezeigt, welche einen Tank mit einem Innenraum und einen zumindest teilweise im Innenraum des Tanks angeordneten Behälter zeigt.

Dieser Behälter weist außenseitig einen Filter auf mit entsprechender Filterfläche und Filtertiefe. Im Behälter befindet sich eine Fördereinheit für das Reduktionsmittel. Die Fördereinheit steht mit einer Abnahmestelle für das Reduktionsmittel in Verbindung. Der Behälter nach DE 10 2010 014 314 A1 kann in die Wandung des Tanks teilweise eingegossen sein, so dass eine fluiddichte Verbindung entsteht. Möglich ist aber auch, dass am Tank ein Flansch angegossen ist, an weichem der Behälter lösbar befestigt wird. Vorzugsweise ist der Behälter in einer Öffnung in einer Tankwand des Tanks befestigt. Der Behälter ist diesbezüglich topfförmig ausgebildet mit einem Topfboden sowie einer zylinderförmigen Topfwand und einer offenen Seite. Dabei ist der Behälter vorzugsweise so in die Tankwand eingesetzt, dass der Behälter die Öffnung in der Tankwand verschließt. Wie bereits dargelegt, nimmt der Behälter die Fördereinheit, ausgebildet als Pumpe, ein Rücklaufventil, einen Sensor und zumindest eine Heizung zur Aufheizung von eingefrorenem Reduktionsmittel auf. Vorzugsweise sind alle aufgezählten Komponenten im Behälter vorhanden.

Die Vorrichtung nach DE 10 2010 014 314 A1 stellt eine große Filterfläche für das Reduktionsmittel zur Verfügung, wobei die Gefahr der Filterverstopfung reduziert ist.

Die Vorrichtung nach DE 10 2010 004 612 A1 zeigt einen Reduktionsmitteltank mit einer am Tankboden angeordneten Kammer in welcher eine Fördereinheit angeordnet ist. Die Kammer selbst ist beheizbar und zumindest an der Kammeroberseite isoliert um eine einwandfreie Entnahme von flüssigem Reduktionsmittel zu ermöglichen.

Aus dem Vorgenannten ist es Aufgabe der Erfindung, eine weiterentwickelte Vorrichtung zur Aufnahme und Bereitstellung von flüssigem Reduktionsmittel, bestehend aus einem Tank und mit einem in den Tankinnenraum hineinreichenden topfartigen Behältnis anzugeben, welche beim späteren Betrieb in besonders einfacher Weise einen Austausch der funktionswesentlichen Komponenten, insbesondere der Fördereinheit ermöglicht, so dass der Wartungs- und Serviceaufwand reduziert ist. Die vorgenannte Aufgabenstellung ist aufgrund der Tatsache von besonderer Brisanz, dass üblicherweise ein Reduktionsmitteltank unter Nutzung vorhandener Hohlräume in einem Kraftfahrzeug an solchen Stellen angeordnet wird bzw. befindlich ist, die ohne aufwendige Montage nur schwer zugänglich sind.

Die Lösung der Aufgabe der Erfindung erfolgt durch die Merkmalskombination gemäß der Lehre des Patentanspruchs 1, wobei die Unteransprüche mindestens zweckmäßige Ausgestaltungen und Weiterbildungen darstellen.

Es wird demnach von einer Vorrichtung zur Aufnahme und Bereitstellung von flüssigem Reduktionsmittel ausgegangen, welches aus einem Tank und einen in den Tankinnenraum hineinreichenden, topfartigen Behältnis besteht. Im Behältnis befinden sich mindestens eine Fördereinheit für das Reduktionsmittel, ein Sensor und ein Anschluss des Reduktionsmittels. Weiterhin sind Mittel zur Befestigung des Behältnisses im oder am Tank ausgebildet.

Erfindungsgemäß ist ein Moduleinsatz vorgesehen, weicher über einen Trägerkörper verfügt. Dieser Trägerkörper nimmt bevorzugt lediglich die Fördereinheit und den Sensor sowie gegebenenfalls den Anschluss zur Abgabe des Reduktionsmittels auf und es sind auf oder mittels des Trägerkörpers funktional erforderliche elektrische und/oder hydraulische Verbindungen realisiert derart, dass zu Wartungs- und Servicezwecken der Moduleinsatz in einfacher Weise entnommen werden kann und gegebenenfalls austauschbar ist. Grundsätzlich soll also der Moduleinsatz bzw. der Trägerkörper nur die funktionswesentlichen Komponenten aufnehmen, die üblicherweise einem Verschleiß und einer gewissen Ausfallwahrscheinlichkeit unterliegen. Dies sind im Regelfall die Fördereinheit, d.h. die Reduktionsmittelpumpe und ein Sensor, insbesondere ein Drucksensor zur Überwachung der über die Pumpe variierbaren Druckverhältnisse im Reduktionsmittel-Versorgungssystem, bevorzugt für ein System, welches in einem Kraftfahrzeug Verwendung findet.

Ausgestaltend umfasst der Trägerkörper eine Trägerplatte, welche als elektrischer Verdrahtungsträger ausgebildet ist oder einen solchen Verdrahtungsträger aufnimmt. Zum Einsatz kommen kann hier eine z.B. mehrlagige Leiterplatte oder eine Trägerplatte mit Leadframe-Kontaktierungsmitteln. Der Sensor, der sich auf dem Trägerkörper befindet, ist bevorzugt als Druck- und/oder Temperatursensor oder als entsprechender kombinierter Sensor ausgebildet.

Der Trägerkörper weist darüber hinaus eine zentrale elektrische Anschlusseinheit auf, die z.B. ein Mehrfachkontaktstecker oder eine Mehrfachkontaktbuchse sein kann, welche üblicherweise in Kraftfahrzeugen eingesetzt wird. Denkbar ist hier auch eine sogenannte Fakra-Verbindung.

Erfindungsgemäß ist der Moduleinsatz als ein austauschbares, kartuschenartiges Gebilde ausgeführt, welches z.B. nach Abnahme eines Deckels ohne weiteres und ohne zusätzliche Werkzeuganwendungen zugänglich ist.

Im Raum zwischen dem Behältnis und dem Moduleinsatz kann in an sich bekannter Weise eine Filtereinheit für das Reduktionsmittel angeordnet sein.

Dadurch, dass der Moduleinsatz in einfacher Weise entnommen werden kann, besteht auch ein leichter Zugang zur Filtereinheit, die diesbezüglich ebenfalls leicht austauschbar ist.

Das topfartige Behältnis kann Bestandteil eines Flansches des Tanks sein. Insofern kann das topfartige Behältnis einstückig mit dem Tank bzw. dem Tankkörper ausgebildet werden.

Bevorzugt besteht der Moduleinsatz aus einem Kunststoffmaterial, welches gegen das Reduktionsmittel beständig ist, insbesondere einem HDPE-Material.

In einer bevorzugten Ausführungsform besitzt der Moduleinsatz eine unregelmäßige geometrische Gestalt, die einer diesbezüglichen Aufnahme im Behältnis bzw. eines Flanschabschnitts des Behältnisses komplementär ist, um einen positions- und anschlussgerechten, d.h. lagegerechten Einbau bzw. Austausch zu ermöglichen.

Die Erfindung soll nachstehend anhand eines Ausführungsbeispiels sowie unter Zuhilfenahme von Figuren näher erläutert werden.

Hierbei zeigen:
- Fig. 1: eine Prinzip-Darstellung der in einem Reduktionsmitteltank angeordneten Vorrichtung mit prinzipieller Darstellung des kartuschenartigen Moduleinsatzes und
- Fig. 2a bis d: verschiedene Darstellungen der Vorrichtung mit Moduleinsatz und Behältnis gemäß einer ersten Ausführungsform, und zwar in Fig. 2a eine Draufsicht auf die Gesamtanordnung Behältnis sowie mit Deckel abgedeckten Moduleinsatz;
- Fig. 2b: eine perspektivische Ansicht ähnlich derjenigen nach Fig. 2a mit abgenommenem Deckel;
- Fig. 2c: eine Darstellung des kartuschenartigen Moduleinsatzes mit Deckel;
- Fig. 2d: eine Darstellung des Moduleinsatzes an sich in perspektivischer Gestalt und
- Fig. 3: eine isometrische Explosionsdarstellung einer zweiten Ausführungsform.

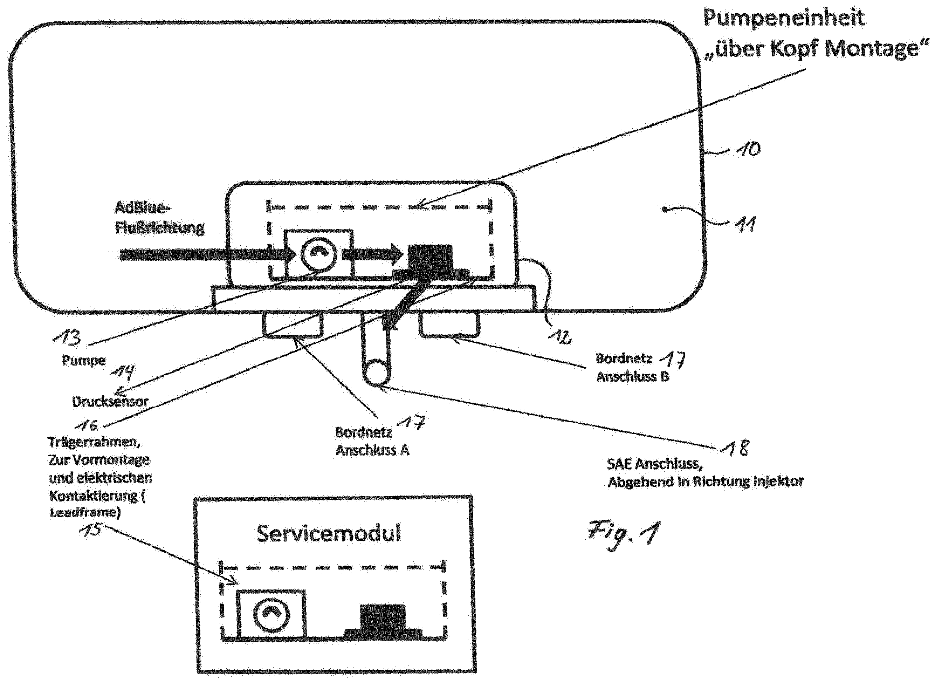

Ausgehend von der Prinzip-Schnittdarstellung nach Fig. 1, oberer Bildteil, ist ein Tank 10 vorhanden, der in seinem Tankvolumen 11 ein flüssiges Reduktionsmittel für ein selektives katalytisches Reduktionsverfahren zur Reinigung von Abgasen eines Kraftfahrzeugs aufnimmt.

In seinem unteren Bereich besitzt der Tank 10 eine Öffnung, in die ein Behältnis 12 einsetzbar ist. Dieses Behältnis 12 besitzt eine beispielhafte topfartige Gestalt. Im Behältnis ist eine Fördereinheit bzw. Pumpe 13 sowie ein Drucksensor 14 befindlich.

Diesbezüglich ist ein Moduleinsatz 15 ausgebildet, der über einen Trägerkörper, insbesondere ausgebildet als Trägerplatte 16 verfügt.

Diese Trägerplatte 16 kann elektrische Verdrahtungsträger aufweisen oder selbst als Verdrahtungsträger ausgebildet sein.

Auf dem Trägerkörper bzw. der Trägerplatte 16 sind die Pumpe 13 und der Drucksensor 14 angeordnet. Die Bodenseite des Behältnisses 12 oder aber die Unterseite, d.h. die nach außen weisende Seite des Moduleinsatzes können über Bordnetzanschlüsse 17 verfügen und einen Anschluss zur Abgabe des Reduktionsmittels 18 umfassen.

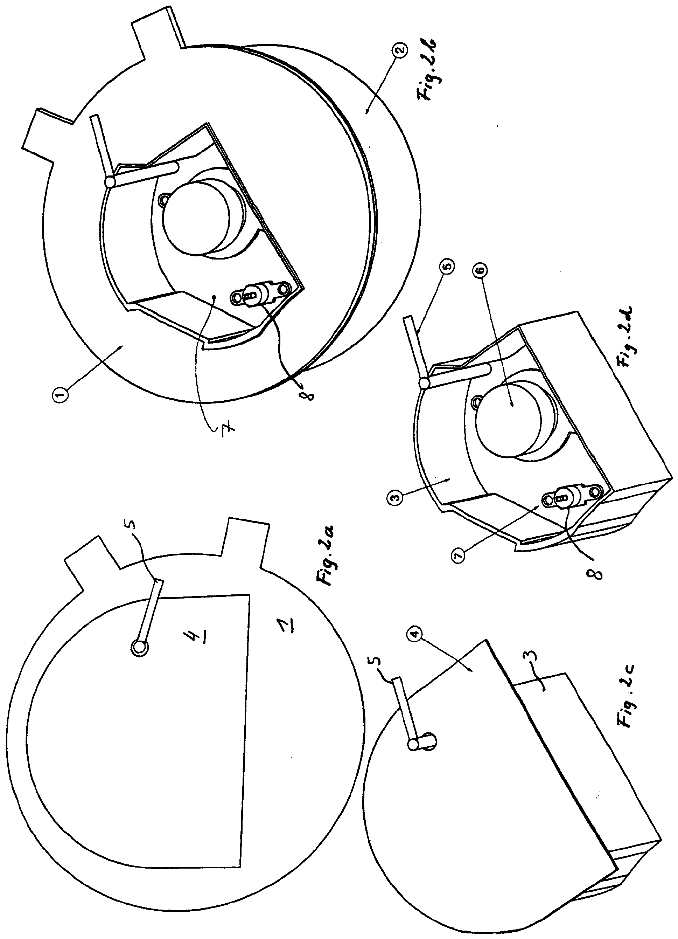

Einzelheiten der beispielhaften Ausbildung des im topfartigen Behältnis anordenbaren Moduleinsatzes einer ersten Ausführungsform sind in den Fig. 2a bis d gezeigt und sollen nachstehend erläutert werden.

Die Fig. 2a zeigt eine Draufsicht auf das Behältnis 12 gemäß Fig. 1, dessen Behältniswandung 2 fest mit dem in der Fig. 1 gezeigten Tank 10 verbunden ist. Das Behältnis 12 ist mit einem Deckel 1 unter Freilassung einer entsprechenden Aussparung für den Moduleinsatz 3 verschlossen. Die offene Seite des Moduleinsatzes 3 wird wiederum mit einem weiteren Deckel 4 abgeschlossen.

Der Moduleinsatz 3 weist einen Trägerkörper 7 auf. Der Trägerkörper 7 nimmt eine Pumpe 6 sowie einen Drucksensor 8 auf, der dem Drucksensor 14 in der Darstellung nach Fig. 1 entspricht.

Weiterhin ist ein hochdruckseitiger Anschluss 5 zur Abgabe des Reduktionsmittels im Bereich des kartuschenartigen Moduleinsatzes 3 befindlich.

Der Moduleinsatz 3 besitzt, wie insbesondere aus der Fig. 2d ersichtlich, eine unregelmäßige geometrische Gestalt und es ist die diesbezügliche Aufnahme im Behältnis 2 bzw. dem dortigen Deckel 1 komplementär ausgeführt, so dass eine positions- und anschlussgerechte Einbausituation geschaffen wird.

Die Trägerplatte 7 mit Drucksensor 8 und Pumpe 6 lässt sich nebst notwendigen hydraulischen und/oder elektrischen Anschlüssen vorfertigen und kann in den Moduleinsatz 3 eingebracht werden, so dass eine Fertigungsrationalisierung erreicht werden kann.

Nicht gezeigte elektrische Anschlüsse können als Mehrfachkontaktstecker oder Mehrfachkontaktbuchse ausgeführt werden, um die Montage bzw. den Austausch des Moduleinsatzes weiter zu optimieren.

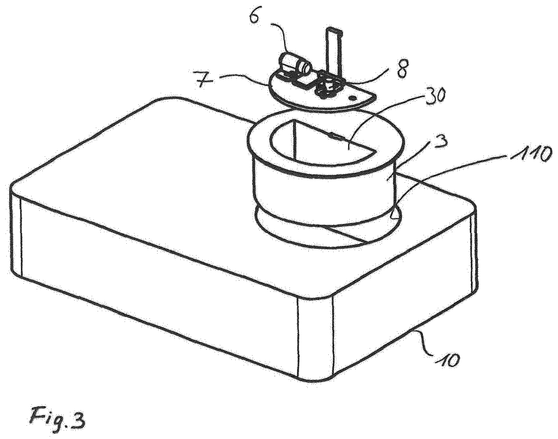

Bei der zweiten Ausführungsform der Erfindung gemäß Fig. 3 wird wiederum von einem Tank 10 ausgegangen, welcher flüssiges Reduktionsmittel aufnimmt.

Der Tank verfügt über eine Öffnung 110, die in der Lage ist, den vorerwähnten Moduleinsatz 3 aufzunehmen.

Im Unterschied zur ersten Ausführungsform der Erfindung weist hier der Moduleinsatz 3 alternativ eine regelmäßige geometrische Gestalt auf.

Im Moduleinsatz 3 ist eine Öffnung 30 vorhanden, in welche der Trägerkörper 7 einbringbar ist.

Diese Öffnung 30 ist beim gezeigten Beispiel unregelmäßig geometrisch ausgebildet, so dass eine exakte Positionierung des Trägerkörpers 7 beim Einsetzen in die Ausnehmung 30 erfolgen kann.

Der Trägerkörper 7 nimmt, wie bereits zur ersten Ausführungsform geschildert, die Pumpe 6 und den Drucksensor 8 auf. Darüber hinaus können ein Druckdämpfer und/oder weitere Bauteile vorhanden sind.

Im notwendig werdenden Servicefall kann nun entweder lediglich der Trägerkörper 7 mit den Funktionselementen Pumpe 6 und Drucksensor 8 als eine Baueinheit entnommen und ausgetauscht werden. Alternativ besteht die Möglichkeit, den gesamten Moduleinsatz 3 zu entnehmen und in einer Mess- und Prüfstation auf Funktionsfähigkeit zu untersuchen. Gegebenenfalls können dann Elemente und Baugruppen auf dem Trägerkörper 7 ausgetauscht oder der komplette Trägerkörper 7 mit allen funktionalen Elementen gewechselt werden.

Maßgeblich ist erfindungsgemäß das Zusammenfassen von Baugruppen und Bauteilen, die einer Wartung bedürfen und/oder einem einsatzbedingten Verschleiß unterliegen. Die zusammengefasste Baugruppe, die sich insbesondere auf dem Trägerkörper 7 befindet, soll mit geringem Aufwand im Rahmen einer üblichen Serviceprozedur geprüft und gegebenenfalls gewechselt werden können, ohne dass aufwendige Arbeiten oder Eingriffe am Fahrzeug bzw. am oder im Tank erforderlich werden.

## Patentansprüche

1. Vorrichtung zur Aufnahme und Bereitstellung von flüssigem Reduktionsmittel, bestehend aus einem Tank (10) und einem in den Tankinnenraum hineinreichenden, topfartigen Behältnis (12), wobei im Behältnis (12) mindestens eine Fördereinheit (13) für das Reduktionsmittel, ein Sensor (14) und ein Anschluss zur Abgabe des Reduktionsmittels (18) vorgesehen sind, sowie mit Mitteln zur Befestigung des Behältnisses am oder im Tank, **dadurch gekennzeichnet, dass**
ein Moduleinsatz (3) ausgebildet ist, welcher über einen Trägerkörper (7) verfügt, wobei dieser mindestens die Fördereinheit (13), den Sensor (14) und den Anschluss zur Abgabe des Reduktionsmittels (18) aufnimmt, sowie weiterhin auf oder mittels des Trägerkörpers (7) funktional erforderliche elektrische und/oder hydraulische Verbindungen realisiert sind, derart, dass zu Wartungs- und Servicezwecken der als austauschbares, kartuschenartiges Gebilde ausgeführte Moduleinsatz (3) in einfacher Weise entnommen werden kann und austauschbar ist, wobei der Trägerkörper (7) eine zentrale elektrische Anschlusseinheit, ausgebildet als Mehrfachkontaktstecker oder Mehrfachkontaktbuchse, aufweist, der Moduleinsatz (3) form- und kraftschlüssig im Behältnis (12) fixierbar ist und eine unregelmäßige, geometrische Gestalt besitzt, die einer diesbezüglichen Aufnahme im Behältnis (12) komplementär ist, um einen positions- und anschlussgerechten Einbau oder Austausch zu ermöglichen, wobei eine offene Seite des Moduleinsatzes (3) mit einem Deckel (4) abgeschlossen ist.

2. Vorrichtung nach Anspruch 1,
**dadurch gekennzeichnet, dass**
der Trägerkörper eine Trägerplatte umfasst, welche als elektrischer Verdrahtungsträger ausgebildet ist oder einen solchen Verdrahtungsträger aufnimmt.

3. Vorrichtung nach einem der vorangegangenen Ansprüche,
**dadurch gekennzeichnet, dass**
im Raum zwischen dem Behältnis (12) und dem Moduleinsatz (3) eine Filtereinheit für das Reduktionsmittel angeordnet ist.

4. Vorrichtung nach einem der vorangegangenen Ansprüche,
**dadurch gekennzeichnet, dass**
das topfartige Behältnis Bestandteil (12) eines Flansches des Tanks (10) ist.

5. Vorrichtung nach einem der vorangegangenen Ansprüche,
**dadurch gekennzeichnet, dass**
der Moduleinsatz (3) aus einem Kunststoffmaterial, insbesondere HDPE besteht.

## Claims

1. A device for receiving and providing liquid reductant, consisting of a tank (10) and a pot-like receptacle (12) extending into the tank's interior space, wherein at least one conveying unit (13) for the reductant, a sensor (14), and a port for delivering the reductant (18) being provided in the receptacle (12), as well as with means for fastening the receptacle on or in the tank,
**characterized in that**
a module insert (3) is formed which has a carrier body (7), the latter accommodating at least the conveying unit (13), the sensor (14), and the port for delivering the reductant (18), as well as functionally required electrical and/or hydraulic connections being further realized on or by means of the carrier body (7) such that the module insert (3) which is configured as an exchangeable, cartridge-like structure can be removed in a simple manner and is exchangeable for maintenance and service purposes, wherein the carrier body (7) comprises a central electrical connection unit configured as a multiple contact plug or a multiple contact socket, the module insert (3) can be fixed in the receptacle (12) in a form and force fit manner and has an irregular geometric shape which is complementary to a corresponding receiving means in the receptacle (12) so as to enable a correctly positioned and connected installation or exchange, with an open side of the module insert (3) being closed by a cover (4).

2. The device according to claim 1,
**characterized in that**
the carrier body comprises a carrier plate which is configured as a carrier of electrical wiring or accommodates such a carrier of electrical wiring.

3. The device according to any one of the preceding claims,
**characterized in that**,
in the space between the receptacle (12) and the module insert (3), a filtering unit for the reductant is arranged.

4. The device according to any one of the preceding claims, **characterized in that**
the pot-like receptacle is a constituent (12) of a flange of the tank (10).

5. The device according to any one of the preceding claims, **characterized in that**
the module insert (3) is made of a plastic material, in particular HDPE.

## Revendications

1. Dispositif pour stocker et mettre à disposition un agent de réduction liquide, constitué d'un réservoir (10) et d'un récipient en forme de pot (12) qui s'étend jusque dans le volume intérieur du réservoir, dans lequel dans le récipient (12) il est prévu au moins une unité d'alimentation (13) pour l'agent de réduction, un détecteur (14) et un raccord pour la distribution de l'agent réducteur (18), et comprenant des moyens pour la fixation du récipient sur ou dans le réservoir,
**caractérisé en ce qu'**il est prévu un insert modulaire (3), qui dispose d'un corps porteur (7), celui-ci recevant au moins l'unité d'alimentation, le détecteur (14) et le raccord pour la distribution de l'agent réducteur (18), et dans lequel des liaisons électriques et/ou hydrauliques nécessaires sur le plan fonctionnel sont réalisées sur ou au moyen du corps porteur (7), de telle façon que pour des besoins d'entretien et de maintenance, l'insert modulaire (3) réalisé sous forme d'une structure interchangeable semblable à une cartouche peut être enlevé et échangé de manière simple, dans lequel le corps porteur (7) comprend une unité de connexion électrique, réalisée sous la forme d'une prise mâle ou d'une prise femelle à contacts multiples, l'insert modulaire (3) est susceptible d'être fixé dans le récipient (12) par coopération de formes et par coopération de forces, et possède une configuration géométrique irrégulière, qui est complémentaire d'un récepteur correspondant dans le récipient (12), afin de permettre un montage ou un échange correct en position et correct en connexion, et un côté ouvert de l'insert modulaire (3) est refermé avec un couvercle (4).

2. Dispositif selon la revendication 1,
**caractérisé en ce que** le corps porteur inclut une plaque porteuse, qui est réalisée sous forme d'un support de câblage électrique ou qui reçoit un tel support de câblage.

3. Dispositif selon l'une des revendications précédentes, **caractérisé en ce qu'**une unité de filtrage pour l'agent réducteur est agencée dans l'espace entre le récipient (12) et l'insert modulaire (3).

4. Dispositif selon l'une des revendications précédentes,
**caractérisé en ce que** le récipient en forme de pot fait partie (12) d'une bride du réservoir (10).

5. Dispositif selon l'une des revendications précédentes,
**caractérisé en ce que** l'insert modulaire (3) est en matière plastique, en particulier du HDPE.
